# EUROPÄISCHE PATENTSCHRIFT

(11) **EP 3 078 959 B1**
(45) Veröffentlichungstag und Bekanntmachung des Hinweises auf die Patenterteilung: **24.05.2017**
(21) Anmeldenummer: 15162969.8
(22) Anmeldetag: 09.04.2015
(51) Int. Cl.: G01N 21/86, G01N 21/84

(54) **VERFAHREN ZUR BESTIMMUNG DER ABRIEBFESTIGKEIT VON MINDESTENS EINER AUF EINER TRÄGERPLATTE ANGEORDNETEN VERSCHLEISSSCHICHT**
METHOD FOR DETERMINING THE ABRASION RESISTANCE OF AT LEAST ONE WEAR LAYER ON A SUPPORT PLATE
PROCÉDÉ DE DÉTERMINATION DE LA RÉSISTANCE À LA FRICTION D'AU MOINS UNE COUCHE D'USURE DISPOSÉE SUR UNE PLAQUE DE SUPPORT

(43) Veröffentlichungstag der Anmeldung: 12.10.2016
(73) Patentinhaber: Flooring Technologies Ltd., Kalkara SCM1001 (MT)
(72) Erfinder: DR. KALWA, Norbert, 32805 Horn-Bad Meinberg (DE); DENK, Andre, 16909 Wittstock/Dosse (DE)
(74) Vertreter: Maikowski & Ninnemann Patentanwälte Partnerschaft mbB

(56) Entgegenhaltungen:
- EP-A1- 2 808 636
- EP-A1- 2 915 658
- DE-A1-102009 037 541

## Beschreibung

Die vorliegende Erfindung betrifft ein Verfahren zur Bestimmung der Abriebfestigkeit von mindestens einer auf einer Trägerplatte angeordneten Verschleißschicht nach dem Oberbegriff des Anspruchs 1 und die Verwendung eines NIR-Detektors zur Bestimmung der Abriebfestigkeit der auf einer Trägerplatte aufgetragenen Verschleißschicht nach Anspruch 13.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, z.B. in Form von Laminatböden, bekannt. Derartige Werkstoffplatten werden üblicherweise aus Holzfasern, Holzspänen oder Strands hergestellt. Im Falle von Laminatböden werden z.B. aus Holzfasern hergestellte HDF-Platten mit vielfältigen Dekoren verwendet.
Insbesondere im Falle der Verwendung von Holzwerkstoffplatten als Laminatböden ist es wünschenswert und notwendig, die dekorativen Oberflächen durch Aufbringen von geeigneten Verschleißschichten vor Abrieb und Abnutzung zu schützen. Als Verschleißschichten werden insbesondere aushärtbare Lacke auf der Basis von Acrylharz, Epoxidharz oder Melaminharzen verwendet.
Zur Verbesserung der Eigenschaften hinsichtlich Verschleißfestigkeit und Kratzfestigkeit ist es bekannt, in diese Harzschichten geeignete Partikel in einem Größenbereich von 50 nm bis 150 µm einzulagern. Hierbei dienen die größeren Partikel der Verbesserung des Abriebwiderstandes und die kleineren Partikel der Verbesserung der Kratzfestigkeit. Als Partikel können z.B. Nanopartikel aus Siliziumkarbid, Siliziumdioxid oder α-Aluminiumoxid eingesetzt werden. Entsprechend ist bei der Produktion von Laminatfußböden die Ermittlung der Abriebfestigkeit der ausgehärteten Verschleißschicht ein entscheidendes Kriterium der Qualitätssicherung.
Im Wesentlichen existieren zwei mögliche Ansätze für die Herstellung einer Verschleißschicht auf einer geeigneten Trägerplatte. So kann die Verschleißschicht aus einem Papieraufbau oder einem Flüssigaufbau bestehen. Im Falle eines Papieraufbaus besteht die Verschleißschicht aus einem dünnen transparenten Papier, das mit einem duroplastischen Harz, wie z.B. einem Melaminformaldehydharz und verschleißhemmenden Partikeln gefüllt ist. Im Falle eines Flüssigaufbaus umfasst die Verschleißschicht eine Harzschicht, die ebenfalls verschleißhemmende Partikel, wie z.B. Korundpartikel sowie andere Hilfsstoffe, wie z.B. Glaskugeln oder Zellulose enthalten kann. Im Falle des Papieraufbaus wird die Verschleißschicht dann mit einem ebenfalls imprägnierten Dekorbogen auf die Oberseite einer Holzwerkstoffplatte aufgelegt oder im Falle des Flüssigaufbaus wird die verschleißhemmende Partikel enthaltende Harzschicht auf eine bereits grundierte und bedruckte Platte in flüssiger Form aufgetragen und getrocknet.

Die Abriebfestigkeit dieser Verschleißschichten hängt hauptsächlich von der Menge der in die Verschleißschicht eingetragenen abriebfesten Partikel ab. Im Falle des Papieraufbaus werden die verschleißhemmenden Partikel auf das Papier während der Imprägnierung aufgestreut. Die Bestimmung der aufgetragenen Menge an abriebfesten Partikeln kann in diesem Falle durch einfache Methoden, wie z.B. die Veraschung des Overlays erfolgen, und zwar bevor das Overlaypapier auf die Trägerplatte aufgetragen wird.

Im Falle einer Verschleißschicht im Flüssigaufbau ist diese Methode allerdings nicht anwendbar, da die verschleißhemmenden Partikel zusammen mit dem flüssigen Harz auf eine bereits grundierte und bedruckte Platte aufgetragen und getrocknet werden. Die Bestimmung der Menge an abriebfesten Partikeln mittels Veraschung der Beschichtung ist durch die aufgetragene Grundierung, die die anorganischen Pigmente enthält, nicht möglich.

Eine Möglichkeit der Mengenbestimmung an abriebfesten Partikeln in einer Verschleißschicht in Form eines Flüssigaufbaus besteht in der Berechnung der Menge an Feststoffpartikeln in der durch Auswiegen bestimmten aufgetragenen Flüssigharzmenge ausgehend von der bekannten Menge an Feststoffpartikeln (z.B. Korundpartikel) in einem Harzauftragsbehälter, was aber nicht unbedingt den tatsächlichen Wert der Feststoffpartikelmenge in der Beschichtung entsprechen muss.

Ein weiterer Ansatz der Bestimmung der Abriebfestigkeit von ausgehärteten Schutzschichten ist gemäß DIN EN 13329:2009 (D) möglich. Hierbei wird die Widerstandsfähigkeit der Deckschicht bzw. Verschleißschicht gegen ein Durchscheuern geprüft. Es werden Proben (z.B. in der Größe 10 cm x 10 cm) aus der zu prüfenden Platte oder dem zu prüfenden Muster ausgeschnitten. Diese Proben werden in eine Prüfvorrichtung eingespannt, an der sich zwei schwenkbare Arme mit beweglichen Reibrollen und ein Gewicht (500 g) befinden. Die Reibrollen sind mit normiertem Schleifpapier beklebt. Die eingespannten Proben rotieren unter den Reibrädern. Alle 200 Umdrehungen wird das Schleifpapier gewechselt und der Verschleiß der Oberfläche geprüft. Die Prüfung ist beendet, wenn in drei Quadranten des Prüfkörpers der Untergrund (Druckbasispapier, Grundierung) in einer Größe von jeweils 0,6 mm² sichtbar ist. Die bis zur Freilegung des Dekors notwendige Anzahl an Umdrehungen wird als Ergebnis angegeben. In der DIN EN 13329 werden folgende Abriebklassen abgestuft und nach zunehmender Beanspruchung definiert:

| Abriebklasse | AC1 | AC2 | AC3 | AC4 | AC5 |
|---|---|---|---|---|---|
| Anzahl der Umdrehungen | ≥ 900 | ≥ 1500 | ≥ 2000 | ≥ 4000 | ≥ 6000 |

Folgend dieser Definition erfordert die Abriebklasse AC1 lediglich um die 900 Umdrehungen, um das Dekor freizulegen. Entsprechend weist eine Verschleißschicht der Abriebklasse AC1 die geringste Abriebfestigkeit auf.

Das beschriebene normierte Prüfverfahren ist allerdings zeitlich sehr aufwändig und liefert nur Einzelwerte, die keine Aussage für die gesamte Produktionsbreite zulassen. So sind die Prüfkörper nur 10 cm x 10 cm groß und werden üblicherweise nur an wenigen Stellen aus der Produktionsplatte entnommen. Um eine Aussage über die gesamte Produktionsplatte machen zu können, müsste die Platte in eine Vielzahl von Prüfkörpern geteilt und geprüft werden. Die Prüfungen dauern zudem in den höheren Abriebklassen teilweise mehrere Stunden und sind wegen des teuren Prüfmittelschleifpapiers auch sehr kostenintensiv.

Insbesondere bei der Verwendung eines Flüssigaufbaus einer Verschleißschicht (d.h. beim Flüssigauftrag von Harz und abriebfesten Partikeln) kann es durch die Veränderungen von Produktionsparametern zu unerwünschten Schwankungen im Auftrag und damit zu Schwankungen in der Verschleißfestigkeit kommen. So ist z.B. durch die permanente Abnahme und Nachdosierung in den Auftragsbehälter eine Viskositätsänderung des Auftragsmediums möglich. Auch können Temperaturschwankungen und Verschleiß der Auftragswalzen den Auftrag negativ beeinflussen. Darüber hinaus kann ein schwankender Abriebwert durch eine ungleichmäßige Auftragsmenge sowie ungleichmäßige Verteilung der Feststoffe in der Verschleißschicht entstehen.

Da es sich bei dem Trägermaterial im vorliegenden Fall insbesondere um Holzwerkstoffe, insbesondere um mittel- oder hochdichte Faserplatten handelt, können, wie bereits oben beschrieben, keine Verfahren eingesetzt werden, die z.B. bei der Papierimprägnierung zum Einsatz kommen. So steht der Verwendung von IR-Strahlung entgegen, dass eine Durchstrahlung des Trägermaterials nicht möglich ist. Andere Technologien, wie Röntgenfluoreszenz, sind ebenfalls nur bedingt einsetzbar, da diese erhöhte Sicherheitsstandards bezüglich des Strahlenschutzes voraussetzen. Die Patentanmeldung DE 10 2009 037541 A1 offenbart ein Verfahren zur Bestimmung der Abriebfestigkeit einer UV-härtenden Lackoberfläche durch das Andrücken und Bewegen eines Reibkörpers auf der Probe. Zusätzlich wird der Härtegrad der Lackschicht während des Aushärtens mit einem Strahlungsdetektor gemessen.

Der vorliegenden Erfindung liegt daher die technische Aufgabe zugrunde, ein einfaches, aber effizientes Verfahren bereitzustellen, mit dem die Abriebfestigkeit einer mit einer Verschleißschicht versehenen Trägerplatte (insbesondere einer Holzwerkstoffplatte) hinreichend genau bestimmt und vorhergesagt werden kann und zwar bevor Verschleißschicht und Trägerplatte miteinander verpresst werden. Zudem sollte das Verfahren keine erhöhten Sicherheitsstandards an die Anlagentechnik erfordern und eine möglichst geringe Fehleranfälligkeit aufweisen.
Die gestellte Aufgabe wird erfindungsgemäß durch ein Verfahren mit den Merkmalen des Anspruchs 1 gelöst.
Demnach wird ein Verfahren zur Bestimmung der Abriebfestigkeit von mindestens einer auf einer Trägerplatte angeordneten Verschleißschicht bereitgestellt. Das vorliegende Verfahren umfasst dabei die folgenden Schritte:
- Aufnehmen von mindestens einem NIR-Spektrum der auf der mindestens einen Trägerplatte angeordneten Verschleißschicht vor dem Aushärten der mindestens einen Verschleißschicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der Abriebfestigkeit der mindestens einen Verschleißschicht durch Vergleich des für die zu bestimmende Abriebfestigkeit der mindestens einen Verschleißschicht ermittelten NIR-Spektrums mit mindestens einem für mindestens eine Referenzprobe der mindestens einen Verschleißschicht mit bekannter Abriebfestigkeit ermittelten NIR-Spektrums mittels einer multivarianten Datenanalyse (MDA),
- wobei das mindestens eine für die mindestens eine Referenzprobe ermittelte NIR-Spektrum mit bekannter Abriebfestigkeit der mindestens einen Verschleißschicht vor dem Aushärten unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm, vorher bestimmt wurde.

Das vorliegende Verfahren ermöglicht demnach die Bestimmung der Abriebfestigkeit einer auf einer Trägerplatte angeordneten Verschleißschicht, wobei die Abriebfestigkeit insbesondere eine Funktion der in der Verschleißschicht enthaltenen Menge an abriebfesten Partikeln darstellt. Ein wesentlicher Aspekt des vorliegenden Verfahrens ist, dass die Abriebfestigkeit der Verschleißschicht noch vor dem Aushärten der Schicht ermittelt wird. Unter Verwendung des NIR-Detektors wird mithilfe von NIR-Strahlung ein NIR-Spektrum der auf die Trägerplatte aufgetragenen Verschleißschicht erzeugt, so dass für die aufgetragene Schicht je nach Konzentration und Menge derselbigen ein NIR-Spektrum mit spezifischen Peaks (Absorptionsbanden) erzeugt wird. Dabei wird das NIR-Signal in die Probe eingestrahlt, am Träger wieder reflektiert und am Messkopf detektiert. Bei dieser Messung werden in wenigen Zehntelsekunden mehrere 100 NIR-Messungen durchgeführt, so dass eine statistische Absicherung der Werte gewährleistet wird. Das vorliegende Verfahren zur Bestimmung der Abriebfestigkeit einer auf einer Trägerplatte angeordneten Verschleißschicht unter Verwendung eines NIR-Detektors nutzt den Umstand aus, dass die NIR-Strahlung nicht durch die gesamte Trägerplatte, d.h. durch Verschleißschicht und Trägerplatte hindurchdringt, sondern an der Oberfläche der Trägerplatte reflektiert wird. Die NIR-Strahlung wird im vorliegenden Verfahren demnach von der Oberfläche der Trägerplatte (insbesondere einer Holzwerkstoffplatte) reflektiert. Die reflektierte NIR-Strahlung wird von dem NIR-Detektor erfasst und das ermittelte NIR-Spektrum wird zur Bestimmung der Abriebfestigkeit verwendet.

In einer bevorzugten Ausführungsform des vorliegenden Verfahrens umfasst die Referenzprobe mit bekannter Abriebfestigkeit der Verschleißschicht eine auf einer Trägerplatte aufgetragene Verschleißschicht, wobei Trägerplatte und Verschleißschicht der Referenzprobe gleichartig sind zu der zu vermessenden Probe aus Trägerplatte und Verschleißschicht; d.h. die Zusammensetzung der zu vermessenden Probe und der Referenzprobe sind gleichartig.

In einer weiteren Ausführungsform des vorliegenden Verfahrens erfolgt die Bestimmung der Abriebfestigkeit der Verschleißschicht der Referenzprobe nach dem Aushärten derselbigen anhand von mindestens einer der ausgehärteten Referenzprobe entnommenen Einzelprobe. Dabei ist es bevorzugt, wenn die Abriebfestigkeit der Verschleißschicht der Referenzprobe anhand von mindestens einer, bevorzugt mindestens vier oder mehr der Referenzprobe entnommenen Einzelproben bestimmt wird. Hierbei erfolgt die Bestimmung der Abriebfestigkeit der Einzelproben der Referenzprobe insbesondere gemäß DIN EN 13 329:2009 (D).

Entsprechend erfolgt die Kalibrierung durch Aufnahme eines NIR-Spektrums einer mit einer Verschleißschicht beschichteten, aber noch nicht ausgehärteten und verpressten Trägerplatte, die nach dem Press- und Härtungsvorgang auf die Abriebfestigkeit geprüft wird, und wie folgt durchgeführt wird: Eine Trägerplatte (z.B. eine Holzwerkstoffträgerplatte) wird mit einer abriebfeste Partikel enthaltenden Verschleißschicht beschichtet. Vor dem Press- und Aushärtungsvorgang wird von der mit der Verschleißschicht versehenen Platte ein NIR-Spektrum aufgenommen. Anschließend erfolgt ein Verpressen der Platte, z.B. in einer Kurztaktpresse, wobei es zu einer vollständigen Aushärtung der Verschleißschutzschicht kommt. Nach dem Abkühlen der mit der Verschleißschicht versehenen Platte werden mehrere Einzelproben für die Prüfung der Abriebfestigkeit entnommen, wobei die Entnahme der Einzelproben für die Prüfung der Abriebfestigkeit bevorzugt an den Stellen der beschichteten Holzwerkstoffplatte erfolgt, an denen das NIR-Spektrum vorher aufgenommen wurde. Die Bestimmung der Abriebfestigkeit der Einzelproben erfolgt gemäß dem oben beschriebenen Standardverfahren DIN EN 13329:2009 (D). Aus den dabei ermittelten Abriebwerten wird ein Mittelwert gebildet, welcher dem jeweiligen NIR-Spektrum zugeordnet wird. Auf diese Weise werden mehrere Referenzspektren von beschichteten Platten mit unterschiedlichen Farbdekoren aufgenommen. Aus den Referenzspektren wird ein Kalibrationsmodell erstellt, welches zur Bestimmung der Abriebfestigkeit einer unbekannten Probe genutzt werden kann. Bei sehr unterschiedlichen Farbdekoren es ist auch denkbar jeweils Cluster von Dekoren zu bilden, die eine ähnliche Farbeinteilung aufweisen. Die Erstellung des Kalibrationsmodells erfolgt mittels multivariater Datenanalyse (MDA), wobei ein Vergleich und die Interpretation der NIR-Spektren sinnvollerweise über den gesamten aufgenommenen Spektralbereich vorgenommen wird. Bei multivariaten Analysemethoden werden typischerweise mehrere statistische Variablen zugleich untersucht. Hierzu wird die in einem Datensatz enthaltene Zahl von Variable reduziert, ohne gleichzeitig die darin enthaltene Information zu mindern.

Im vorliegenden Fall erfolgt die multivariate Datenanalyse über das Verfahren der Partial Least Squares (PLS-Regression), wodurch ein geeignetes Kalibrationsmodell erstellt werden kann. Die Auswertung der gewonnenen Daten wird bevorzugt mit einer geeigneten Analysesoftware vorgenommen, wie z.B. mit der Analysesoftware SIMCA-P der Firma Umetrix AB oder The Unscrambler der Firma CAMO.

Ein Vorteil der Ermittlung eines NIR-Spektrums zur Bestimmung der Abriebfestigkeit von Verschleißschichten besteht darin, dass der NIR-Detektor über die gesamte Plattenbreite traversieren kann und bestimmte Problembereiche analysieren kann. Zudem stehen die Messwerte sofort zur Verfügung und erlauben einen unmittelbaren Eingriff in den Produktionsprozess, was bei anderen Verfahren nicht ohne weiteres möglich ist. Das vorliegende Verfahren ermöglicht die Anwendung eines automatisch geregelten Systems mit Alarmmeldung und der automatischen Anpassung von Abriebfestigkeit des Produktes durch eine automatische Anpassung der Auftragsmenge an abriebfesten Partikeln, ausgehend von einer NIR-Messung.

Somit ergibt sich für das vorliegende Verfahren eine Reihe von Vorteilen: zerstörungsfreie kontinuierliche Ermittlung der Abriebfestigkeit der Verschleißschutzschicht, und automatisch geregeltes System mit Alarmmeldung und eine Messung über die gesamte Produktionsbreite.

In einer Ausführungsform des vorliegenden Verfahrens ist die mindestens eine Verschleißschicht ausgewählt aus der Gruppe enthaltend
a) mindestens eine wärmehärtbare Schutzschicht, und/oder
b) mindestens eine UV-härtbare und/oder Elektronen-härtbare (ESH)-Schutzschicht.

In einer besonders bevorzugten Ausführungsform des vorliegenden Verfahrens wird eine wärmehärtbare Harzschicht a) als Verschleißschicht verwendet. Die wärmehärtbare Harzschicht kann dabei neben den abriebfesten Partikeln, natürliche und/oder synthetische Fasern und auch weitere Additive enthalten. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz, ein Melamin-Harnstoff-Formaldehyd-Harz oder ein Harnstoff-Formaldehyd-Harz.

Die in der mindestens einen Verschleißschicht, wie der wärmehärtbaren Harzschicht, enthaltenen abriebfesten Partikel, sind insbesondere ausgewählt aus der Gruppe enthaltend Aluminiumoxide (z. B. Korund), Borcarbide, Siliziumdioxide (z. B. Glaskugeln), Siliziumcarbide.

Wie erwähnt, kann die Verschleißschicht z.B. in Form einer wärmehärtbaren Harzschicht auch natürliche oder synthetische Fasern, ausgewählt aus der Gruppe enthaltend Holzfasern, Zellulosefasern, partiell gebleichte Zellulosefasern, Wollfasern, Hanffasern und organische oder anorganische Polymerfasern, enthalten. Als weitere Additive können Flammschutzmittel und/oder lumineszierende Stoffe zugegeben werden. Geeignete Flammschutzmittel können ausgewählt sein aus der Gruppe enthaltend Phosphate, Borate, insbesondere Ammoniumpolyphosphat, Tris(tribromneopentyl)phosphat, Zinkborat oder Borsäurekomplexe von mehrwertigen Alkoholen. Als lumineszierende Stoffe können fluoreszierende oder phosphoreszierende Stoffen, insbesondere Zinksulfit und Alkalialuminate zum Einsatz kommen.

Ein Verfahren zur Herstellung einer Verschleißschicht in Form einer wärmehärtbaren Harzschicht (Flüssigoverlay) ist unter anderem in der EP 233 86 93 A1 beschrieben. In dem darin beschriebenen Beispiel erfolgt zunächst nach Reinigung der Oberfläche einer Holzwerkstoffplatte das Aufbringen einer ersten oberen, abriebfeste Partikel (z.B. Korundpartikel) enthaltenen Harzschicht auf eine Holzwerkstoffplatte als Trägerplatte, ein Trocknen dieser ersten Harzschicht, z.B. bis auf eine Restfeuchte von 3-6 %, anschließendes Aufbringen einer zweiten, Zellulosefasern enthaltenen Harzschicht auf die Holzwerkstoffplatte, wiederholtes Trocknen bzw. Antrocknen der zweiten Harzschicht, z.B. bis auf eine Restfeuchte von 3-6 %, Aufbringen einer mindestens dritten Glaspartikel enthaltenen Harzschicht auf die Holzwerkstoffplatte mit anschließendem Antrocknen der dritten Harzschicht, z.B. ebenfalls auf eine Restfeuchte von 3-6 % und ein finales Verpressen des Schichtaufbaus unter Druck- und Temperatureinfluss.

Entsprechend kann die mindestens eine Verschleißschicht, z.B. in Form der hier beschriebenen wärmehärtbaren Harzschicht, mindestens zwei Lagen, bevorzugt mindestens drei nacheinander aufgetragene Lagen umfassen. Dabei ist die Auftragsmenge der Lagen gleich oder verschieden und kann jeweils zwischen 1 und 50 g/m², bevorzugt zwischen 2 und 30 g/m², insbesondere zwischen 5 und 15 g/m², betragen.

Das Flüssigoverlay kann sowohl auf die Oberseite als auch auf die Unterseite der Holzwerkstoffplatte aufgetragen werden.

Gemäß der Variante b) der vorliegenden Verschleißschutzschicht ist es vorgesehen, dass diese in Form einer UV-härtbaren und/oder Elektronenstrahl-härtbaren (ESH)-Schutzschicht vorliegt. Hierfür sind insbesondere strahlenhärtbare, acrylathaltige Lacke einsetzbar. Typischerweise enthalten die als Verschleißschicht verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureestermonomeren, Oligomeren oder Polymeren enthält.

In einer Ausführungsform sind bevorzugterweise mehr als eine strahlenhärtbare Schutzschicht, bevorzugt zwei oder drei Schutz- bzw. Verschleißschichten, vorgesehen, die jeweils aufeinander angeordnet oder aufgetragen werden. In solchen Fällen kann die Auftragsmenge für jede einzelne Schutzschicht bzw. Lage einer Schutzschicht zwischen 10 g/m² und 50 g/m², bevorzugt 20 g/m² und 30 g/m² variieren oder gleich sein. Die Gesamtauftragsmenge kann in Abhängigkeit von der Anzahl der Lagen zwischen 30 g/m² und 150 g/m², bevorzugt 50 g/m² und 120 g/m² variieren.

Auch kann die mindestens eine Verschleißschutzschicht chemische Vernetzer enthalten, z.B. auf Basis von Isocyanaten, wodurch die Zwischenhaftung der einzelnen übereinander angeordneten Verschleißschutzschichten erhöht wird.

Wie bereits für die wärmehärtbare Harzschicht beschrieben, kann auch die strahlenhärtbare Schutzschicht neben den abriebfesten Partikeln natürliche und/oder synthetische Fasern und weitere Additive enthalten. Die in der strahlenhärtbaren Verschleißschutzschicht verwendete Acrylatverbindung ist aufgrund ihrer Reaktivität in der Lage, sich an die in der Schutzschicht vorliegenden Fasern, abriebfesten Partikel oder Additive anzulagern bzw. diese zu umhüllen. Während des Verpressens der Holzwerkstoffplatten bei erhöhter Temperatur kommt es durch die Wärmewirkung zu einer chemischen Vernetzung der reaktiven Doppelbindung der Acrylatverbindungen und somit zu einer Ausbildung einer Polymerschicht auf den Fasern, Partikeln, Farbpigmenten oder Additiven, die einem Ausbleichen entgegenwirkt.

In einer Ausführungsform des vorliegenden Verfahrens umfasst die mindestens eine Verschleißschicht abriebfeste Partikel in einer Menge zwischen 5 bis 100 g/m², bevorzugt 10 und 70 g/m², insbesondere bevorzugt 20 und 50 g/m². Je höher die Menge an abriebfesten Partikel in der Verschleißschicht, desto höher ist auch deren Abriebfestigkeit, so dass die Bestimmung der Abriebfestigkeit auch indirekt die Bestimmung der Menge an abriebfesten Partikeln unter Verwendung des vorliegenden Verfahrens ermöglicht.

Die mittels des vorliegenden Verfahrens zu vermessende Verschleißschicht kann eine Dicke zwischen 0,01 und 10 mm, bevorzugt 0,05 und 7 mm, insbesondere bevorzugt 0,1 und 5 mm, aufweisen.

In einer Variante des vorliegenden Verfahrens wird als Trägerplatte einer Holzwerkstoffplatte, insbesondere eine mitteldichte Faser (MDF), hochdichte Faser (HDF), Grobspan (OSB) oder Sperrholzplatte, eine Zementfaserplatte und/oder Gipsfaserplatte, eine Magnesiumoxid-Platte, eine Holz-Kunststoff-Platte und/oder eine Kunststoffplatte verwendet.

In einer Variante ist vorgesehen, dass zwischen der Trägerplatte und der mindestens einen Verschleißschicht mindestens eine Grundierungsschicht und mindestens eine Dekorschicht angeordnet sind.

Die dabei bevorzugt verwendete Grundierungsschicht umfasst eine Zusammensetzung aus Kasein als Bindemittel und anorganische Pigmente, insbesondere anorganische Farbpigmente. Als Farbpigmente können in der Grundierungsschicht weiße Pigmente wie Titandioxid TiO₂ verwendet werden oder aber auch weitere Farbpigmente, wie Calciumcarbonat, Bariumsulfat oder Bariumcarbonat. Die Grundierung kann neben den Farbpigmenten und dem Kasein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

Nach Auftrag der Grundierungsschicht wird dieselbige in mindestens einem Konvektionstrockner getrocknet. Bei Auftrag von mehreren Grundierungsschichten bzw. Grundierungslagen erfolgt entsprechend jeweils ein Trocknungsschritt nach dem Auftrag der jeweiligen Grundierungsschicht bzw. Grundierungslage. Es ist ebenfalls vorstellbar, dass nach jedem Trocknungsschritt einer Grundierungsschicht ein oder mehrere Schleifaggregate zum Schleifen der Grundierungsschichten vorgesehen sind.

Vorliegend kann in einer weiteren Ausführungsform des Verfahrens im Falle des Auftrages von mindestens einer Grundierungsschicht auf die Trägerplatte anschließend auf dieselbige mindestens eine Primerschicht, z.B. in Form eines UV- oder ESH-Spachtels aufgetragen werden.

Die bereits oben erwähnte Dekorschicht kann mittels Direktdruck aufgetragen werden. Im Falle eines Direktdruckes erfolgt der Auftrag einer wasserbasierten pigmentierten Druckfarbe im Tiefdruckverfahren oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten.

Im Falle des Direktdrucks erfolgt der Auftrag der mindestens einen Dekorschicht wie erwähnt mittels eines analogen Tiefdruckverfahrens und/oder eines Digitaldruckverfahrens. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

Die mit einer Verschleißschicht in Form einer Flüssigoverlayschicht (Variante a) oder einer strahlenhärtbaren Schutzschicht (Variante b) versehene Trägerplatte kann ebenfalls mit einer 3D-Prägestruktur versehen werden, wobei die Oberflächenstruktur bevorzugt in einer Kurztaktpresse optional synchron zum Dekor aufgeprägt wird. Die 3D-Struktur wird bevorzugterweise mittels geeigneter Prägestrukturen eingeprägt bzw. eingedrückt. Die Strukturierungen können unter Verwendung von strukturierten Lackwalzen, strukturierten Kalandern oder strukturierten Pressblechen erfolgen.

Das vorliegende Verfahren ermöglicht somit die Bestimmung der Abriebfestigkeit einer Holzwerkstoffplatte mit folgendem Schichtaufbau: Holzfaserträgerplatte-Grundierungsschicht-Primerschicht-Dekorschicht-Verschleißschicht. Jede dieser Schichten kann in einer oder mehreren Lagen vorhanden sein. Auf der Rückseite der Holzfaserträgerplatte können ein Gegenzugpapier und weitere schalldämmende Schichten aufgetragen werden. Als schalldämmende Schichten kommen insbesondere vernetzte PE-Matten mit Dicken von 1,0 mm oder 0,3-3 mm dicke gefüllte Schwerfolien aber auch geschäumte PE- oder PU-Folien zum Einsatz.

In einer besonders bevorzugten Ausführungsform des vorliegenden Verfahrens wird auf die Unterseite der Holzträgerplatte mindestens eine wärmehärtbare Harzschicht aufgetragen, die jedoch keine abriebfesten Partikel enthält.

Das vorliegende Verfahren zur Bestimmung der Abriebfestigkeit einer auf einer Trägerplatte angeordneten Verschleißschicht wird in einer Vorrichtung bzw. Fertigungslinie zur Herstellung von Werkstoffplatten durchgeführt, die mindestens eine Vorrichtung zum Auftragen von mindestens einer Verschleißschicht auf eine Trägerplatte, wie z.B. eines Flüssigoverlays, mindestens eine Vorrichtung zum Trocknen derVerschleißschicht und mindestens einen NIR-Detektor zur Durchführung des erfindungsgemäßen Verfahrens umfasst, wobei der mindestens eine NIR-Detektor in Verarbeitungsrichtung nach der Auftragsvorrichtung und der Trocknungsvorrichtung angeordnet ist.

Der mindestens eine NIR-Detektor ist demnach in einer Fertigungslinie der mindestens einen Werkstoffplatte, umfassend mindestens eine Auftragsvorrichtung für die aufzutragende Verschleißschicht, wie zum Beispiel eine Walze, Sprühvorrichtung oder Gießvorrichtung und mindestens eine Trocknungsvorrichtung, z.B. in Form eine Konvektionstrockners, IR- und/oder NIR-Trockners angeordnet.

In einer Variante umfasst die vorliegende Vorrichtung bzw. Fertigungslinie eine Vorrichtung zum Auftragen von mindestens einer Harzschicht auf die der Verschleißschicht gegenüberliegende Seite der Trägerplatte und eine Vorrichtung zum Trocknen dieser mindestens einen Harzschicht, wobei beide Vorrichtungen in Verarbeitungsrichtung vor dem mindestens einen NIR-Detektor angeordnet sind.

Es ist insbesondere bevorzugt, wenn die Vorrichtung zum Auftragen der mindestens einen Verschleißschicht auf die Oberseite der Trägerplatte und die Vorrichtung zum Auftragen der mindestens einen Harzschicht auf die Unterseite der Trägerplatte parallel zueinander angeordnet sind, so dass ein gleichzeitiger Auftrag von Verschleißschicht auf die Oberseite und Harzschicht auf die Unterseite der Trägerplatte ermöglicht wird. In Analogie dazu ist es ebenfalls bevorzugt, wenn die jeweiligen Trocknungsvorrichtungen für Verschleißschicht auf der Oberseite und Harzschicht auf der Unterseite der Trägerplatte so zueinander angeordnet sind, dass der Trocknungsvorgang zum selben Zeitpunkt erfolgt.

Es ist auch denkbar, dass die Vorrichtung bzw. Fertigungslinie zur Herstellung der Werkstoffplatten mehr als eine Auftragsvorrichtung für die Verschleißschicht und Harzschicht und mehr als eine Trocknungsvorrichtung für Verschleißschicht/Harzschicht umfasst, wobei der mindestens eine NIR-Detektor in Verarbeitungsrichtung nach der letzten Trocknungsvorrichtung angeordnet ist. In solch einem Fall kann die Auftragsmenge pro Verschleißschicht und pro Auftragsvorrichtung gleich sein oder variieren. Die gesamte Menge an Verschleißschicht kann z.B. im Falle von drei Lagen der Verschleißschicht zwischen 50 g/m² und 120 g/m² variieren und pro Auftragsvorrichtung zwischen 25 Gew% und 50 Gew% betragen.

Es ist auch denkbar, dass die vorliegende Fertigungslinie Auftragsvorrichtungen und Trocknungsvorrichtungen für mindestens eine Grundierungsschicht und/oder Primerschicht umfasst sowie eine Auftragsvorrichtung zum Auftragen von mindestens einer Dekorschicht. In diesem Fall kann die Auftragsvorrichtung für eine Dekorschicht mehrere Druckwalzen zum Tiefdruck (z.B. drei oder vier Druckwalzen) umfassen.

Es ist aber auch denkbar, dass die Fertigungslinie auf Auftragsvorrichtungen und/oder Trocknungsvorrichtungen für Grundierungsschicht, Primerschicht und/oder Dekorschicht verzichtet und bereits vorbedruckte und zwischengelagerte Holzwerkstoffplatten verwendet.

In einer bevorzugten Ausführungsform sieht der Aufbau einer Fertigungslinie wie folgt aus:
a) eine erste Auftragsvorrichtung zum Auftragen von mindestens einer ersten Lage einer Verschleißschicht auf die Oberseite einer Trägerplatte, insbesondere einer bedruckten Trägerplatte, und von mindestens einer ersten Lage einer Harzschicht (ohne abriebfeste Partikel) auf die Unterseite der Trägerplatte;
b) ein in einer Verarbeitungsrichtung hinter der ersten Auftragsvorrichtung angeordnetes IR-Aggregat (wobei das IR-Aggregat insbesondere einer Erzeugung einer vorbestimmten Mindestoberflächentemperatur und Vergleichmäßigung der Oberflächentemperatur dient) und mindestens einer sich in Verarbeitungsrichtung hinter dem IR-Aggregat angeordneten ersten Trocknungsvorrichtung (z.B. Konvektionstrockner) zum Trocknen der mindestens einen ersten Lage der Verschleißschutzschicht und/oder Harzschicht;
c) eine in Verarbeitungsrichtung hinter der ersten Trocknungsvorrichtung angeordnete zweite Auftragsvorrichtung zum Auftragen von mindestens einer zweiten Lage einer Verschleißschicht auf die Oberseite der Trägerplatte und mindestens einer zweiten Lage einer Harzschicht auf die Unterseite der Trägerplatte;
d) eine in einer Verarbeitungsrichtung hinter der zweiten Auftragsvorrichtung angeordnete zweite Trocknungsvorrichtung (z.B. Konvektionstrockner) zum Trocknen der mindestens einen zweiten Lage der Verschleißschutzschicht und/oder Harzschicht;
e) eine in Verarbeitungsrichtung hinter der zweiten Trocknungsvorrichtung angeordnete dritte Auftragsvorrichtung zum Auftragen von mindestens einer dritten Lage einer Verschleißschutzschicht auf die Oberseite der Trägerplatte und mindestens einer dritten Lage einer Harzschicht auf die Unterseite der Trägerplatte;
f) eine in einer Verarbeitungsrichtung hinter der dritten Auftragsvorrichtung angeordnete dritte Trocknungsvorrichtung (z.B. Konvektionstrockner) zum Trocknen der mindestens einen dritten Lage der Verschleißschutzschicht / Harzschicht;
g) eine in Verarbeitungsrichtung hinter der dritten Trocknungsvorrichtung angeordneten NIR-Detektor zur Bestimmung der Abriebfestigkeit der auf der Oberseite der Trägerplatte angeordneten Verschleißschicht;
h) eine in Verarbeitungsrichtung hinter dem NIR-Detektor angeordnete Kurztaktpresse (KT-Presse) zum Verpressen und Aushärten der auf der Oberseite der Trägerplatte angeordneten Verschleißschicht und der auf der Unterseite der Trägerplatte angeordneten Harzschicht.

Die zum Einsatz kommenden Auftragsvorrichtungen sind bevorzugterweise Auftragswalzen, die ein Auftragen der Schichten auf die Oberseite bzw. die Unterseite der Trägerplatte ermöglichen. Bevorzugterweise erfolgt ein paralleles Auftragen von Verschleißschicht auf die Oberseite und Harzschicht auf die Unterseite der Holzwerkstoffträgerplatte.

Je nach Anforderung der Fertigungslinie ist es selbstverständlich möglich, die Anzahl der Auftragsvorrichtungen und Trocknungsvorrichtungen zu variieren. So kann z.B. im Anschluss an die KT-Presse ein Kühlwender zum Abkühlen der ausgehärteten Holzwerkstoffplatten vorgesehen sein.

Wie aus den obigen Ausführungen entnehmbar, erfolgt die NIR-Messung nach dem letzten Harzauftrag hinter dem entsprechenden Konvektionstrockner vor der KT-Presse. Dabei wird jede einzelne Platte von dem NIR-Detektor online gemessen. Durch das Bewegen des NIR-Detektors quer zur Produktionsrichtung ist eine Messung der Abriebfestigkeit über die gesamte Produktionsbreite möglich. Somit bietet die NIR-Messung ein zerstörungsfreies kontinuierliches Messverfahren zur Bestimmung der Abriebfestigkeit und ermöglicht ein sofortiges Eingreifen in den Prozessablauf.

Die Erfindung wird nachfolgend unter Bezugnahme auf die Figuren der Zeichnungen an einem Ausführungsbeispiel näher erläutert. Es zeigen:
- Figur 1: eine schematische Darstellung der für die Abriebfestigkeitsprüfung zur Kalibrierung einer mit einer Verschleißschicht versehenen Trägerplatte als Referenzprobe entnommenen Einzelproben; und
- Figur 2: eine schematische Darstellung einer Fertigungslinie einer Werkstoffplatte unter Verwendung des erfindungsgemäßen Verfahrens.

### Erstellen einer Referenzprobe und Kalibrierung

Die Kalibrierung erfolgt durch Aufnahme eines NIR-Spektrums einer mit einer Verschleißschicht versehenen, aber noch nicht verpressten Trägerplatte als Referenzprobe, die nach dem Pressvorgang auf die Abriebfestigkeit geprüft wird.

Hierfür wird eine bedruckte HDF-Platte 1 an einer Beschichtungsanlage mittels Auftragswalze von oben mit flüssigem Melamin-Formaldehyd-Harz mit Glas- und Korundpartikeln über mehrere Walzenauftragsmaschinen mit Zwischentrocknung gleichmäßig beschichtet. Die Menge der Feststoffpartikel in der Gesamtbeschichtung variiert je nach produzierter Abriebklasse und liegt zwischen 10 bis 50 g/m². Die verwendeten Feststoffpartikel weisen einen Durchmesser zwischen 10 und 100 µm auf.

Vor dem Pressvorgang in der KT-Presse wird von der beschichteten Trägerplatte ein NIR-Spektrum in einem vorbestimmten Abschnitt 2 der Trägerplatte aufgenommen.

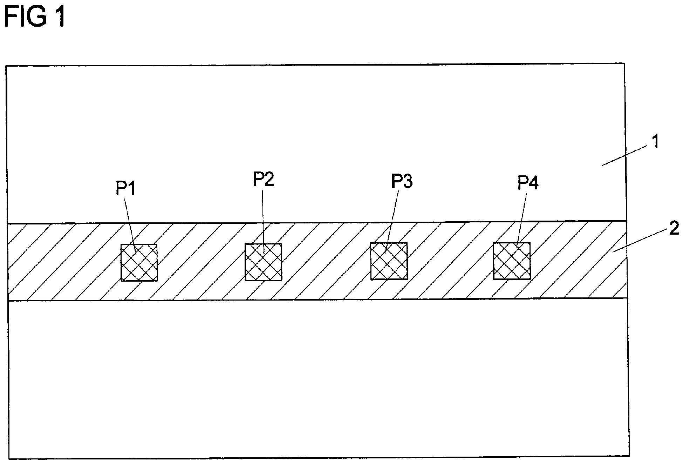

Danach wird die Platte in einer Kurztaktpresse bei 200°C und 40 bar für 8 Sekunden lang gepresst. Dabei wird die Schutzschicht vollständig ausgehärtet. Nach dem Abkühlen der Platte werden mehrere (insbesondere vier) 10 cm x 10 cm Proben (P1-P4) für die Prüfung der Abriebfestigkeit entnommen. Die Probennahme für die Prüfung der Abriebfestigkeit erfolgt in dem Bereich 2 der Platte, in dem das NIR-Spektrum aufgenommen wurde (siehe Figur 1).

Die Abriebwerte werden gemäß dem Verfahren nach DIN EN 13329 bestimmt und aus den Abriebwerten wird ein Mittelwert gebildet und dem gemessenen NIR-Spektrum zugeordnet. Auf diese Weise werden mehrere Referenzspektren von beschichteten Platten mit unterschiedlichen Farbdekoren aufgenommen. Aus den Referenzspektren wird ein Kalibrationsmodell erstellt, welches zur Ermittlung bzw. Vorhersage der Abriebfestigkeit einer unbekannten Probe genutzt werden kann. Die Erstellung des Kalibrationsmodells erfolgt mittels multivariater Datenanalyse. Dies geschieht mit einer geeigneten Analysesoftware, z.B. mit der Analysesoftware The Unscrambler der Firma CAMO.

Das NIR-Spektrum wurde vorliegend in einem Wellenlängenbereich zwischen 900 und 1700 nm aufgenommen. Für die Aufnahmen der NIR-Spektren wurde ein NIR-Messgerät der Firma Perten verwendet. Der Messkopf trägt die Bezeichnung DA7400.

### Ausführungsbeispiel

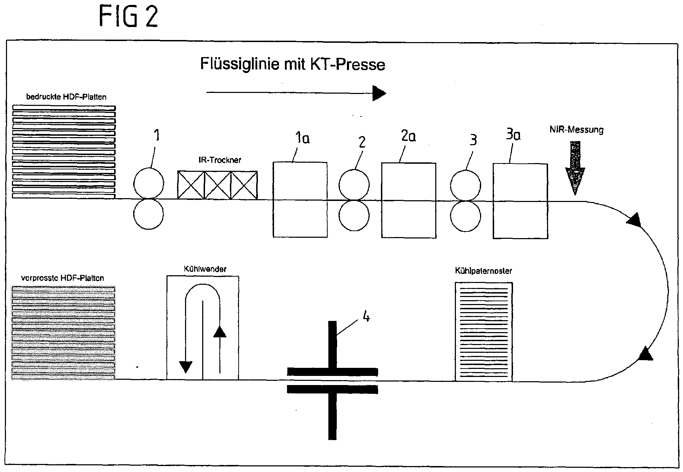

Das Messverfahren wird am Beispiel der Abriebfestigkeitsbestimmung einer Schutzschicht an einer Flüssiglinie mit KT-Presse, die in Figur 2 schematisch dargestellt ist, erläutert.

An der Flüssiglinie werden 2,0 m breite und 2,80 m lange, bedruckte HDF-Platten mit einer Plattendicke von 8 mm mit 30 m/min verarbeitet. Hierfür werden die Platten in drei Auftragswerken (1 bis 3) auf der Oberseite mit einem flüssigen Feststoffpartikel enthaltenen Melamin-Formaldehyd-Harz und von unten mit einem flüssigen Melamin-Formaldehyd-Harz beschichtet. Als Beschichtungsharz dient ein wässriges Melamin-Formaldehyd-Harz mit einem Feststoffanteil von 60 Gew%.

Nach jedem Auftrag werden die Platten in jeweils einem Heißlufttrockner (1a-3a) bei 200°C getrocknet.. Die gesamte Auftragsmenge des Flüssigoverlays in dem vorliegenden Ausführungsbeispiel nach drei Aufträgen variiert je nach Anforderungen zwischen 50 g/m² und 120 g/m² und ist zwischen den einzelnen Auftragswerken wie folgt verteilt: AW1- 50 Gew.-% / AW2 -25 Gew.-%/ AW3 - 25 Gew.-%.

Im Anschluss an den dritten Konvektionstrockner 3a erfolgt die NIR-Messung. Dabei wird jede einzelne Platte von dem NIR-Detektor online gemessen, wobei sich der NIR-Detektor quer zur Produktionsrichtung bewegt, so dass eine Bestimmung der Abriebfestigkeit über die gesamte Produktionsbreite der Holzwerkstoffplatte möglich ist.

Anschließend werden die beschichteten Holzwerkstoffplatten in einer Kurztaktpresse 4 bei 200°C für 8 Sekunden gepresst. Der spezifische Druck der KT-Presse beträgt 40 kg/cm² (40 bar). Im Anschluss an den Press- und Härtungsvorgang werden die Platten in einem Kühlwender abgekühlt und anschließend gelagert oder unmittelbar weiter verwendet.

Somit bietet die NIR-Messung ein zerstörungsfreies kontinuierliches Messverfahren zur Bestimmung der Abriebfestigkeit einer Verschleißschicht und ermöglicht ein sofortiges Eingreifen in den Prozessablauf.

## Patentansprüche

1. Verfahren zur Bestimmung der Abriebfestigkeit von mindestens einer auf einer Trägerplatte angeordneten Verschleißschicht
umfassend die Schritte
- Aufnehmen von mindestens einem NIR-Spektrum der auf der mindestens einen Trägerplatte angeordneten Verschleißschicht vor dem Aushärten der mindestens einen Verschleißschicht mit der Trägerplatte unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der Abriebfestigkeit der mindestens einen Verschleißschicht durch Vergleich des für die zu bestimmende Abriebfestigkeit der mindestens einen Verschleißschicht ermittelten NIR-Spektrums mit mindestens einem für mindestens eine Referenzprobe der mindestens einen Verschleißschicht mit bekannter Abriebfestigkeit ermittelten NIR-Spektrums mittels einer multivarianten Datenanalyse (MDA),
wobei das mindestens eine für die mindestens eine Referenzprobe ermittelte NIR-Spektrum mit bekannter Abriebfestigkeit der mindestens einen Verschleißschicht vor dem Aushärten unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** die Abriebfestigkeit der mindestens einen Verschleißschicht der mindestens einen Referenzprobe nach dem Aushärten anhand von mindestens einer der ausgehärteten Referenzprobe entnommenen Einzelprobe bestimmt wurde.

3. Verfahren nach Anspruch 2, **dadurch gekennzeichnet, dass** die Abriebfestigkeit der Verschleißschicht der Referenzprobe anhand von mindestens einer, bevorzugt mindestens vier oder mehr, der Referenzprobe entnommenen Einzelproben, bevorzugt gemäß DIN EN 13329:2009 (D) bestimmt wird.

4. Verfahren nach einem der vorhergehenden Ansprüche, **dadurch gekennzeichnet, dass** die Referenzprobe mit bekannter Abriebfestigkeit der Verschleißschicht eine auf einer Trägerplatte aufgetragene Verschleißschicht umfasst, wobei Trägerplatte und Verschleißschicht der Referenzprobe gleichartig zu der zu vermessenden Probe aus Trägerplatte und Verschleißschicht sind.

5. Verfahren nach einem der vorhergehenden Ansprüche, **dadurch gekennzeichnet, dass** die mindestens eine Verschleißschicht ausgewählt ist aus der Gruppe enthaltend a) mindestens eine wärmehärtbare Schutzschicht und/oder b) mindestens eine UV-härtbare und/oder elektronenstrahlhärtbare Schutzschicht.

6. Verfahren nach einem der vorhergehenden Ansprüche, **dadurch gekennzeichnet, dass** die mindestens eine Verschleißschicht mindestens eine wärmehärtbare Schutzschicht umfasst.

7. Verfahren nach einem der vorhergehenden Ansprüche, **dadurch gekennzeichnet, dass** die mindestens eine Verschleißschicht abriebfeste Partikel, insbesondere ausgewählt aus der Gruppe enthaltend Aluminiumoxide , Borcarbide, Siliziumdioxide und Siliziumcarbide umfasst.

8. Verfahren nach einem der vorhergehenden Ansprüche, **dadurch gekennzeichnet, dass** die mindestens eine Verschleißschicht abriebfeste Partikel in einer Menge zwischen 5 und 100 g/m², bevorzugt 10 und 70 g/m², insbesondere bevorzugt 20 und 50 g/m² umfasst.

9. Verfahren nach einem der vorhergehenden Ansprüche, **dadurch gekennzeichnet, dass** die mindestens eine Verschleißschicht eine Dicke zwischen 0,01 bis 10 mm, bevorzugt 0,05 bis 7 mm, insbesondere bevorzugt 0,1 bis 5 mm aufweist.

10. Verfahren nach einem der vorhergehenden Ansprüche, **dadurch gekennzeichnet, dass** die mindestens eine Verschleißschicht mindestens zwei Lagen, bevorzugt mindestens drei nacheinander aufgetragene Lagen umfasst.

11. Verfahren nach Anspruch 10, **dadurch gekennzeichnet, dass** die Auftragsmenge der Lagen gleich oder verschieden ist.

12. Verfahren nach einem der vorhergehenden Ansprüche, **dadurch gekennzeichnet, dass** die mindestens eine Trägerplatte eine Holzwerkstoffplatte, insbesondere eine mitteldichte Faserplatte, hochdichte Faserplatte, Grobspanplatte oder Sperrholzplatte ist, eine Zementfaserplatte und/oder Gipsfaserplatte, eine Magnesiumoxid-Platte, eine Holz-Kunststoff-Platte und/oder eine Kunststoffplatte ist.

13. Verwendung von mindestens einem NIR-Detektor zur Bestimmung der Abriebfestigkeit der auf einer Trägerplatte aufgetragenen Verschleißschicht gemäß einem Verfahren nach einem der Ansprüche 1 bis 12 in einer Vorrichtung zur Herstellung von Werkstoffplatten.

## Claims

1. Method for determining the abrasion resistance of at least one wear layer arranged on a support plate comprising the steps of
recording at least one NIR spectrum of the wear layer arranged on the at least one support plate before the curing of the at least one wear layer with the support plate by using at least one NIR detector in a wavelength range between 500 nm and 2500 nm, preferably between 700 nm and 2000 nm, particularly preferably between 900 nm and 1700 nm;
determining the abrasion resistance of the at least one wear layer by comparison of the NIR spectrum determined for the abrasion resistance to be determined of the at least one wear layer with at least one NIR spectrum determined for at least one reference specimen of the at least one wear layer with known abrasion resistance by means of a multivariate data analysis (MDA),
wherein the at least one NIR spectrum with a known abrasion resistance of the at least one wear layer that is determined for the at least one reference specimen was determined in advance before the curing by using the same NIR detector in a wavelength range between 500 nm and 2500 nm, preferably between 700 nm and 2000 nm, particularly preferably between 900 nm and 1700 nm.

2. Method according to Claim 1, **characterized in that** the abrasion resistance of the at least one wear layer of the at least one reference specimen was determined after the curing on the basis of at least one individual specimen taken from the cured reference specimen.

3. Method according to Claim 2, **characterized in that** the abrasion resistance of the wear layer of the reference specimen is determined on the basis of at least one, preferably at least four or more, individual specimens taken from the reference specimen, preferably in accordance with DIN EN 13329:2009 (D).

4. Method according to one of the preceding claims, **characterized in that** the reference specimen with known abrasion resistance of the wear layer comprises a wear layer applied to a support plate, wherein the support plate and the wear layer of the reference specimen are similar to the specimen to be measured comprising a support plate and a wear layer.

5. Method according to one of the preceding claims, **characterized in that** the at least one wear layer is selected from the group comprising a) at least one heat-curable protective layer and/or b) at least one UV-curable and/or electron-beam-curable protective layer.

6. Method according to one of the preceding claims, **characterized in that** the at least one wear layer comprises at least one heat-curable protective layer.

7. Method according to one of the preceding claims, **characterized in that** the at least one wear layer comprises abrasion-resistant particles, in particular selected from the group comprising aluminium oxides, boron carbides, silicon dioxides and silicon carbides.

8. Method according to one of the preceding claims, **characterized in that** the at least one wear layer comprises abrasion-resistant particles in an amount between 5 and 100 g/m², preferably 10 and 70 g/m², particularly preferably 20 and 50 g/m².

9. Method according to one of the preceding claims, **characterized in that** the at least one wear layer has a thickness between 0.01 and 10 mm, preferably 0.05 to 7 mm, particularly preferably 0.1 to 5 mm.

10. Method according to one of the preceding claims, **characterized in that** the at least one wear layer comprises at least two plies, preferably at least three plies applied one after the other.

11. Method according to Claim 10, **characterized in that** the applied amount of the plies is the same or different.

12. Method according to one of the preceding claims, **characterized in that** the at least one support plate is a wood-based material board, in particular a medium-density fibre board, a high-density fibre board, a coarse-particle board or a plywood board, a cement-fibre board and/or a gypsum-fibre board, a magnesium-oxide board, a wood-plastic panel and/or a plastic panel.

13. Use of at least one NIR detector for determining the abrasion resistance of the wear layer applied to a support plate by a method according to one of Claims 1 to 12 in a device for producing material boards.

## Revendications

1. Procédé pour déterminer la résistance à l'abrasion d'au moins une couche d'usure disposée sur une plaque de support, comprenant les étapes suivantes:
- enregistrement d'au moins un spectre NIR de la couche d'usure disposée sur ladite au moins une plaque de support avant le durcissement de ladite au moins une couche d'usure avec la plaque de support en utilisant au moins un détecteur NIR dans une plage de longueur d'onde comprise entre 500 nm et 2500 nm, de préférence entre 700 nm et 2000 nm, et de préférence encore entre 900 nm et 1700 nm;
- détermination de la résistance à l'abrasion de ladite au moins une couche d'usure par comparaison du spectre NIR déterminé pour la résistance à l'abrasion à déterminer de ladite au moins une couche d'usure avec au moins un spectre NIR déterminé pour au moins un échantillon de référence de ladite au moins une couche d'usure avec une résistance à l'abrasion connue, par une analyse de données à variables multiples (MDA), dans lequel ledit au moins un spectre NIR déterminé pour ledit au moins un échantillon de référence avec une résistance à l'abrasion connue de ladite au moins une couche d'usure a été déterminée au préalable avant le durcissement en utilisant le même détecteur NIR dans une plage de longueur d'onde comprise entre 500 nm et 2500 nm, de préférence entre 700 nm et 2000 nm, et de préférence encore entre 900 nm et 1700 nm.

2. Procédé selon la revendication 1, **caractérisé en ce que** la résistance à l'abrasion de ladite au moins une couche d'usure dudit au moins un échantillon de référence a été déterminée après le durcissement à l'aide d'au moins un échantillon individuel prélevé dans l'échantillon de référence durci.

3. Procédé selon la revendication 2, **caractérisé en ce que** l'on détermine la résistance à l'abrasion de la couche d'usure de l'échantillon de référence à l'aide d'au moins un, de préférence d'au moins quatre, ou plus, échantillon(s) individuel(s), prélevé(s) dans l'échantillon de référence, de préférence selon la norme DIN EN 13329:2009 (D).

4. Procédé selon l'une quelconque des revendications précédentes, **caractérisé en ce que** l'échantillon de référence avec une résistance à l'abrasion connue de la couche d'usure comprend une couche d'usure déposée sur une plaque de support, dans lequel la laque de support et la couche d'usure de l'échantillon de référence sont identiques à l'échantillon à mesurer composé d'une plaque de support et d'une couche d'usure.

5. Procédé selon l'une quelconque des revendications précédentes, **caractérisé en ce que** ladite au moins une couche d'usure est choisie dans le groupe comprenant: a) au moins une couche de protection durcissable à chaud et/ou b) au moins une couche de protection durcissable aux UV et/ou durcissable par faisceau d'électrons.

6. Procédé selon l'une quelconque des revendications précédentes, **caractérisé en ce que** ladite au moins une couche d'usure comprend au moins une couche de protection durcissable à chaud.

7. Procédé selon l'une quelconque des revendications précédentes, **caractérisé en ce que** ladite au moins une couche d'usure comprend des particules résistant à l'abrasion, en particulier choisies dans le groupe contenant des oxydes d'aluminium, des carbures de bore, des dioxydes de silicium et des carbures de silicium.

8. Procédé selon l'une quelconque des revendications précédentes, **caractérisé en ce que** ladite au moins une couche d'usure comprend des particules résistant à l'abrasion en une quantité comprise entre 5 et 100 g/m², de préférence entre 10 et 70 g/m², et de préférence encore entre 20 et 50 g/m².

9. Procédé selon l'une quelconque des revendications précédentes, **caractérisé en ce que** ladite au moins une couche d'usure présente une épaisseur comprise entre 0,01 et 10 mm, de préférence entre 0,05 et 7 mm, et de préférence encore entre 0,1 et 5 mm.

10. Procédé selon l'une quelconque des revendications précédentes, **caractérisé en ce que** ladite au moins une couche d'usure comprend au moins deux couches, de préférence au moins trois couches déposées l'une après l'autre.

11. Procédé selon la revendication 10, **caractérisé en ce que** la quantité de dépôt des couches est égale ou différente.

12. Procédé selon l'une quelconque des revendications précédentes, **caractérisé en ce que** ladite au moins une plaque de support est une plaque en matériau dérivé du bois, en particulier un panneau de fibres moyenne densité, un panneau de fibres haute densité, un panneau à copeaux orientés ou un panneau de contreplaqué, un panneau en fibre-ciment et/ou une plaque fibre-gypse, une plaque en oxyde de magnésium, un panneau bois-plastique et/ou une plaque de matière plastique.

13. Utilisation d'au moins un détecteur NIR pour la détermination de la résistance à l'abrasion de la couche d'usure disposée sur une plaque de support suivant un procédé selon l'une quelconque des revendications 1 à 12 dans un dispositif pour la fabrication de plaques de matériau.
